# EUROPÄISCHE PATENTANMELDUNG

(11) **EP 1 256 764 A2**
(43) Veröffentlichungstag der Anmeldung: **13.11.2002**
(21) Anmeldenummer: 02009530.3
(22) Anmeldetag: 26.04.2002
(51) Int. Cl.: F24D 3/16, F24D 3/12

(54) **Wärmetauscher**

(30) Priorität: 10.05.2001 DE 10122554
(71) Anmelder: gabo Systemtechnik GmbH, 94559 Niederwinkling (DE)
(72) Erfinder: Wöhrl, Helmut, 94327 Bogen (DE); Bauer, Peter, 94357 Konzell (DE); Baumann, Friedhelm, 94362 Neukirchen (DE)

(57) **Zusammenfassung**

Die Erfindung bezieht sich auf einen universell einsetzbaren, vorgefertigten Wärmetauscher mit einem vorgefertigten Rohrregister, das ein temperiertes Fluid führt, wobei das Rohrregister derart angeordnet ist, dass das Fluid das Rohrregister stets von oben nach unten verlaufend durchströmt.

## Beschreibung

Die Erfindung betrifft einen Wärmetauscher gemäß dem Oberbegriff des Anspruches 1.

Wärmetauscher für Rohrregister zur Durchleitung von warmen oder kalten Wasser für Raum-Temperiersysteme sind an sich bekannt. Sie eignen sich insbesondere zur Erzeugung eines gesunden Raumklimas. Im Winter wird ein erwärmtes Temperierfluid und im Sommer ein gekühltes Temperierfluid, vorzugsweise Wasser, hindurchgeleitet. In Verbindung mit Decken- und Fußbodentemperiersystemen lässt sich auf einfache Weise ein nahezu ideales Raumklima einstellen. Beispielsweise zeigt die EP 0 039 446 einen Konstruktionsaufbau für eine flächenförmige Raumbeheizung, wie z.B. Fußboden- oder Wandheizung; auch die PCT/SE90/00461 offenbart eine solche Anordnung von Rohren als Wärmetauscher auf wärmeisolierenden Platten. Ein weiteres plattenförmiges Element für den Innenausbau ist der AT ..... zu entnehmen.

Wärmetauschem mit Rohrregistem haftet ein gemeinsamer Nachteil an. Sie entleeren sich, beispielsweise nach Druckproben, vor Reparaturarbeiten usw. nicht selbsttätig. Ein Rest Wasser bleibt stets in Umlenkungen oder ansteigenden Rohrabschnitten stehen. Dieser Rest ist z.B bei Parallelschaltung, ungleich langer Rohrabschnitte selbst mittels Durchblasen von Drucklluft nicht entfernbar und gibt im Winter, bei Frost, Anlass zum Platzen des Rohrregisters.

Der Erfindung, wie sie in den Ansprüchen beschrieben ist, liegt daher die Aufgabe zugrunde, einen universell einsetzbaren, vorgefertigten Wärmetauscher mit einem vorgefertigtes Rohrregister zu schaffen, der diese Nachteile nicht mehr aufweist, wobei der Wärmetauscher bzw. dessen Rohrregister sowohl in die Rillen einer ebenfalls vorgefertigten Montageplatte einsetzbar sein muß, als auch direkt auf einer Wand oder dergl. montierbar sein soll.

Die mit der Erfindung erzielten Vorteile liegen insbesondere darin, dass, wegen des vorgegebenen Mindestgefälles, keine Schäden durch Einfrieren der Rohrregister eintreten können, da diese sich selbsttätig vollständig entleeren und somit auf den Einsatz von Druckluft verzichtet werden kann. Ein weiterer Vorteil ist, dass das Rohrregister sowohl in Rillen der ebenfalls vorgefertigten Montageplatte oder dergl., als auch direkt auf einer Wand oder dergl. sowohl innerhalb als auch außerhalb von Gebäuden anbringbar ist, also universell eingesetzt werden kann. Der Wärmetauscher kann auch mit Vorteil als freistehendes Temperierelement fest oder beweglich innerhalb von Gebäuden, auch an Einrichtungsgegenständen, beispielsweise auch im Freien Aufstellung finden.

Die Erfindung ist nachstehend anhand der in den Abbildungen dargestellten Ausführungsbeispiele näher erläutert.

### Es zeigt:

- Fig. 1:: eine Montageplatte ohne Rohrregister,
- Fig. 2:: einen Wärmetauscher mit Rohrregister,

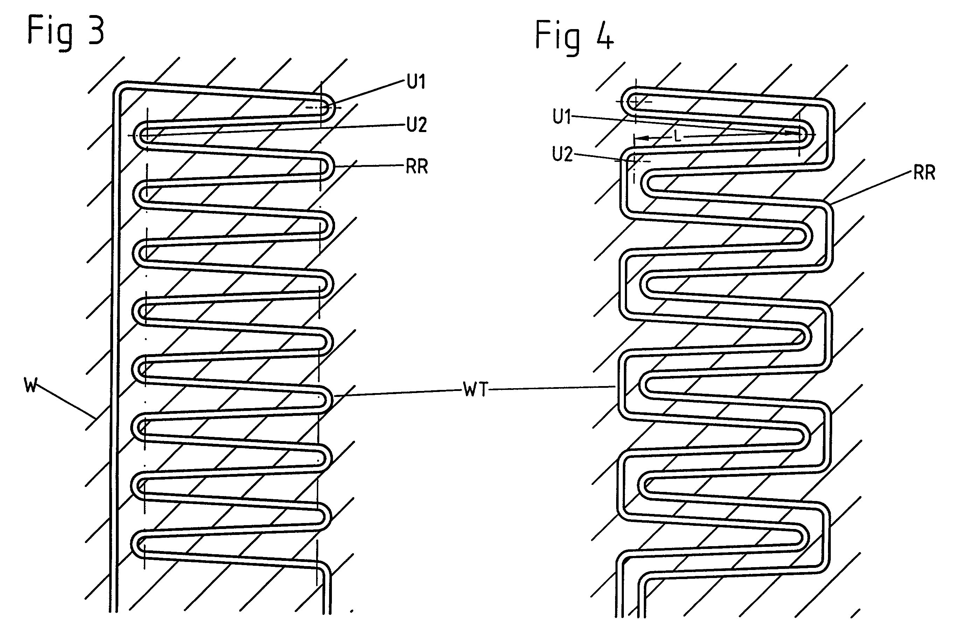

- Fig. 3:: ein Rohrregister montiert an einer Wand oder dergl.,
- Fig. 4:: ein weiteres Ausführungsbeispiel und

Der in den Abbildungen dargestellte vorgefertigte fluiddurchströmte Wärmetauscher WT besteht im Wesentlichen aus einem Rohrregister RR, das beispielsweise an einer Wand W, Montageplatte M, Gestell G oder in einem Flechtwerk F angeordnet ist und ggfl. einer Montageplatte M, bzw. sonstigen Fixierelementen, den zugeordneten Zu- und Rücklaufleitungen ZL bzw. RL.

Um das Einfrieren in den Umlenkungsbereichen U des Rohrregisters RR zu verhindern, weist der Rohrleitungsabschnitt L zwischen zwei Umlenkungen U1,U2 stets ein Gefälle von mindestens 1% der Strecke |←L→| auf, so daß beim Entleeren des Rohrregisters kein Wasserrest darin verbleibt. Das Rohrregister entleert sich somit selbsttätig,, egal ob das Rohrregister RR in einfachen oder doppelten Mäandem oder dergl. verlegt ist.

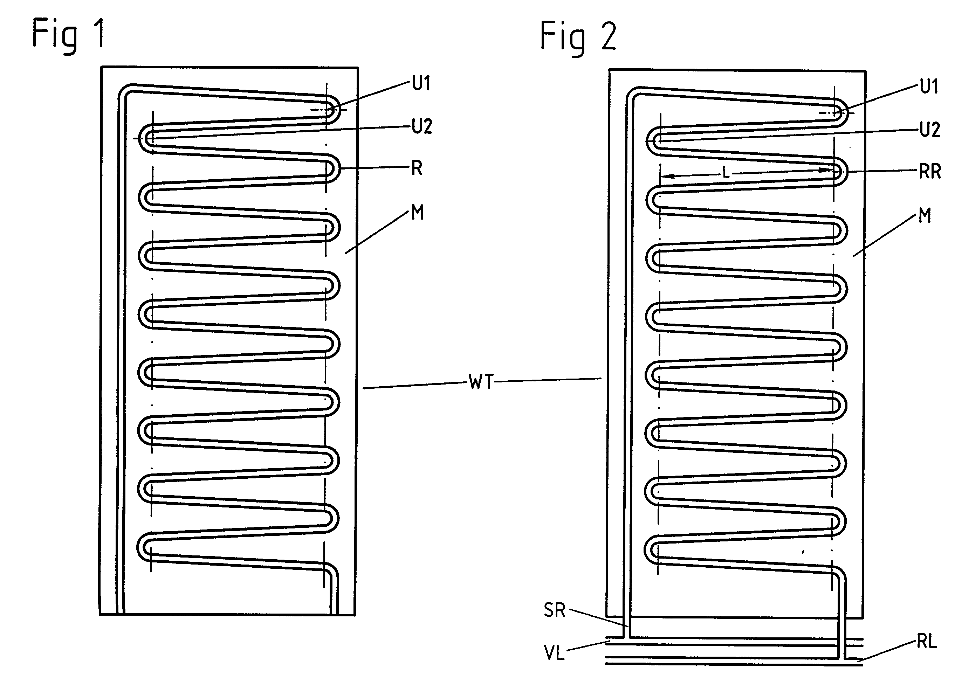

Eine besonders einfache Verlegung des Rohrregisters ist in den Abbildungen 1 und 2 dargestellt. Dabei ist eine vorgefertigte Montageplatte M mit Rillen R für die Aufnahme des Rohrregisters RR vorgesehen. Figur 1 zeigt die Montageplatte M und Figur 2 den fertig montierten Wärmetauscher bestehend aus Montageplatte M, Rohrregister RR, Vorlauf VL und Rücklauf VR sowie den zugeordneten Steig- und/oder Fallleitungen.

Das Rohrregister kann in bekannter Weise sowohl von oben als auch von unten angeströmt werden.

## Patentansprüche

1. Vorgefertigter Wärmetauscher für Temperiersysteme mit einem von einem Temperierfluid durchströmten Rohrregister, **dadurch gekennzeichnet, daß** der Wärmetauscher (WT) für die Montage an einer Wand (W) oder Montageplatte (M) vorgesehen ist, wobei dessen Rohrregister (RR) von oben nach unten ein Gefälle aufweist, das zwischen zwei Umlenkungen (U1,U2) mindestens 1% dieses Abstandes (L) beträgt.

2. Wärmetauscher **dadurch gekennzeichnet, dass** eine vorgefertigte Montageplatte für die Aufnahme eines Wärmetauschers vorgesehen ist, mindestens eine Oberflächen der Montageplatte (M) mit etwa mäanderförmig verlaufenden Rillen (R) für die Aufnahme eines Rohrregisters (RR) versehen ist, die von oben nach unten ein Gefälle aufweisen, wobei das Gefälle zwischen zwei Umlenkungen (U1,U2) mindestens 1% dieses Abstandes (L) beträgt.

3. Wärmetauscher und Rohrregister nach Anspruch 1, **dadurch gekennzeichnet, dass** die Rohrregister (RR) von einem unterhalb desselben verlaufenden Vorlauf (VL) über ein Steigrohr (SR) angeströmt sind.

4. Wärmetauscher und Rohrregister nach Anspruch 1 und 2, **dadurch gekennzeichnet, dass** das Rohrregister (RR) über einen oberhalb desselben verlaufenden Vorlauf (VL) über ein Fallrohr (F) von oben angeströmt ist.

5. Wärmetauscher und Rohrregister nach Anspruch 1 bis 3, **dadurch gekennzeichnet, dass** das Rohrregister (RR) mit einem unterhalb desselben mit leichtem Gefälle verlaufenden Rücklauf (RL) verbunden ist.

6. Wärmetauscher und Rohrregister nach Anspruch 1 und einen der folgenden, **dadurch gekennzeichnet, dass** der Wärmetauscher (WT) mit dem Rohrregister (RR) an einer Montageplatte (M), Wand (W), Fußboden (FB) und/oder Decke (D) vorgesehen ist.

7. Wärmetauscher und Rohrregister nach Anspruch 1 und einen der folgenden, **dadurch gekennzeichnet, dass** der Wärmetauscher (WT) mit an einer Montageplatte (M) beidseitig angeordneten Rohrregistern (RR1, RR2) freistehend aufgestellt ist.

8. Wärmetauscher und Rohrregister nach Anspruch 1 und einen der folgenden, **dadurch gekennzeichnet, dass** mit Rohrregistern (RR), (R1,R2) ausgerüstete Montageplatten (M) Bestandteil eines Einrichtungsgegenstandes ist.

9. Wärmetauscher und Rohrregister nach Anspruch 1 und einen der folgenden, **dadurch gekennzeichnet, dass** die Wärmetauscher (WT) mit seinen Rohrregistern (RR), (R1,R2) als Trennwand ausgebildet ist.

10. Vorgefertigtes Rohrregister nach Anspruch 1 und 9, **dadurch gekennzeichnet, dass** ein rahmenartiges Gestell (G) mit Halterungen und Befestigungen für das Rohrregister (RR) vorgesehen ist, das mitsamt dem darauf fixierten Rohrregister an einer Wand (W) oder Platte (P) befestigt ist.

11. Wärmetauscher und Rohrregister nach Anspruch 1 und einem der folgenden, **dadurch gekennzeichnet dass** zwischen den Umlenkungen (U1, U2) ein etwa horizontaler Rohrverlauf vorgesehen ist, bei dem die gerade Länge (L) zwischen den beiden Umlenkungen höchstens dem einhundertfachen des Rohrdurchmessers entspricht.

12. Wärmetauscher und Rohrregister nach Anspruch 1 und einem der folgenden, **dadurch gekennzeichnet dass** das Rohrregister (RR) nur eine vertikale Umlenkung (VU) aufweist, bei der die Rohre des Rohrregisters nach unten verlaufen und keine vertikale Umlenkung vorhanden ist, bei der die Rohre in Strömungsrichtung nach oben verlaufen.
